# EUROPÄISCHE PATENTSCHRIFT

(11) **EP 1 258 198 B1**
(45) Veröffentlichungstag und Bekanntmachung des Hinweises auf die Patenterteilung: **23.06.2004**
(21) Anmeldenummer: 02008854.8
(22) Anmeldetag: 19.04.2002
(51) Int. Cl.: A22C 11/12

(54) **Darmschweissvorrichtung**
Welding device for casing
Dispositif de soudure pour boyaux

(30) Priorität: 15.05.2001 DE 10123532
(43) Veröffentlichungstag der Anmeldung: 20.11.2002
(73) Patentinhaber: Heinrich Frey Maschinenbau GmbH, 89542 Herbrechtingen-Bolheim (DE)
(72) Erfinder:
(74) Vertreter: Manitz, Finsterwald & Partner GbR

(56) Entgegenhaltungen:
- WO-A-94/07371
- DE-A- 19 944 774
- DE-U- 20 103 309

## Beschreibung

Die Erfindung betrifft eine Vorrichtung zum Verschweißen des Darmes von insbesondere einen Wurststrang bildenden Würsten.

Um einen Wurststrang zwischen zwei aufeinanderfolgenden Würsten aufzutrennen, werden bisher üblicherweise die beiden Würste im Bereich eines die Form einer Abdrehung aufweisenden Darmabschnitts durch separate Hilfsmittel wie beispielsweise Metall-Clipse oder Schnüre abgebunden, woraufhin der Darmabschnitt zwischen den Abbindestellen durchtrennt werden kann. Diese Vorgehensweise ist nicht nur vergleichsweise umständlich, sondern hat außerdem unansehnliche Wurstenden zur Folge. Auch ein in der Praxis häufig durchgeführtes und insbesondere bei Darmplatzern erfolgendes, manuelles Verknoten des Darmes zum Verschließen der Würste ist arbeitsaufwendig und ergibt unschöne Wurstenden, was sich verkaufshemmend auswirken kann.

Aus der DE 199 44 774 A1 ist es bekannt, Würste durch Verschweißen bzw. Koagulieren des Darmes zu verschließen. Hierzu sind in einem stationären Tischgerät zwei beheizbare und relativ zueinander bewegbare Schweißbacken vorgesehen. Zwischen die geöffneten Schweißbacken wird ein zu verschweißender Darmabschnitt eingebracht und durch Schließen der speziell geformten Schweißbacken an zwei in Längsrichtung voneinander beabstandeten Stellen verschweißt. Der Darmabschnitt kann dann zwischen den Schweißstellen getrennt werden. Nachteilig bei dieser feststehenden Einrichtung ist, daß die zu behandelnden Würste oder Wurststränge zum Tischgerät gebracht werden müssen, was ein einfaches und schnelles Verschweißen direkt an einer Füllmaschine oder direkt an aufgehängten Wurststrängen praktisch unmöglich macht.

Aufgabe der Erfindung ist es, eine Darmschweißvorrichtung zu schaffen, die einfach bedienbar sowie flexibel und vielseitig einsetzbar ist, und die ein schnelles und sicheres Verschließen von Würsten durch Verschweißen des Darmes gestattet.

Die Lösung dieser Aufgabe erfolgt durch die Merkmale des Anspruchs 1 und insbesondere dadurch, daß die Schweißvorrichtung als mobiles Handgerät ausgebildet ist, das zumindest zwei beheizbare und relativ zueinander bewegbare Schweißbacken, zwischen die in einer offenen Stellung ein zu verschweißender Darmabschnitt einbringbar ist, der durch Schließen der Schweißbacken verschweißbar ist, und eine zwischen den Schweißbacken angeordnete Positioniereinrichtung aufweist, mit welcher der Darmabschnitt bei geöffneten Schweißbacken und beim Schließen der Schweißbacken am Gerät in einer zwischen den Schweißbacken gelegenen Schweißzone fixierbar ist.

Erfindungsgemäß brauchen die zu verschweißenden Würste nicht zu einer feststehenden Schweißstation gebracht zu werden, sondern der Benutzer kann sich mit dem mobilen Handgerät gemäß der Erfindung praktisch völlig frei bewegen und an den jeweiligen Einsatzort begeben. Mit dem Handgerät ist eine schnelle und flexible Vor-Ort-Verschweißung z.B. direkt an einer Füllmaschine oder an aufgehängten Wurststrängen möglich. Die erfindungsgemäß zwischen den Schweißbacken angeordnete Positioniereinrichtung stellt sicher, daß der Darmabschnitt die Sollposition relativ zu den Schweißbacken einnimmt. Die erfindungsgemäße Handschweißvorrichtung ist nicht nur frei beweglich und grundsätzlich beliebig relativ zu den verschließenden Würsten orientierbar, sondern ermöglicht aufgrund der als Einführhilfe dienenden Positioniereinrichtung außerdem einen reinen Einhandbetrieb auch bei lose hängenden Wurststrängen.

Vorzugsweise ist die Positioniereinrichtung derart ausgebildet, daß der mittels der Positioniereinrichtung fixierte Darmabschnitt in der Schweißzone von den geöffneten Schweißbacken beabstandet ist. Ein unbeabsichtigter Kontakt des Darmes mit den Schweißbacken vor dem eigentlichen Schweißvorgang wird hierdurch verhindert.

Des weiteren wird vorgeschlagen, daß die Positioniereinrichtung eine in die Schweißzone führende Zwangsführung für den Darmabschnitt aufweist. Die Zwangsführung erleichtert die Fixierung des Darmabschnitts in der Schweißzone, da der Benutzer nur dafür sorgen muß, daß der Darmabschnitt in die Zwangsführung hineingelangt, der Benutzer anschließend aber das Gerät nicht mehr einzusehen braucht. Das erfindungsgemäße Handschweißgerät kann praktisch "blind" benutzt werden. Außerdem kann der Darmabschnitt auf seinem durch die Zwangsführung vorgegebenen Weg in die Schweißzone in sicherem Abstand an den Schweißbacken vorbeigeführt werden.

In einer weiteren bevorzugten praktischen Ausgestaltung der Erfindung ist vorgesehen, daß die Zwangsführung wenigstens einen zur Schweißzone führenden Schlitz für den Darmabschnitt umfaßt.

Der Schlitz ist vorzugsweise in einem freien, von der Schweißzone entfernten Endbereich der Positioniereinrichtung insbesondere V-förmig erweitert. Mit der Schlitzerweiterung wird es dem Benutzer erleichtert, den Darmabschnitt einzufangen bzw. in den Schlitz einzufädeln.

Ferner wird vorgeschlagen, daß die Breite des Schlitzes zumindest im Bereich der Schweißzone etwa dem Durchmesser des Darmabschnitts entspricht, wobei der Darmabschnitt insbesondere die Form einer Abdrehung aufweist. Ein teilweise gefüllter Darmabschnitt kann durch den Schlitz hindurchgezogen werden, wodurch in vorteilhafter Weise das im Darmabschnitt vorhandenes Produkt zusammengeschoben wird, woraufhin die dann pralle Wurst durch Verschweißen geschlossen werden kann. Stillstandszeiten im Fall von Darmplatzern an Füllmaschinen werden hierdurch verkürzt, und Ausschuß wird verringert.

Eine weitere Ausführungsform der Erfindung schlägt vor, daß die Positioniereinrichtung zumindest einen vorzugsweise gebogenen Flachstreifen umfaßt, in dem bevorzugt wenigstens ein in die Schweißzone führender Schlitz für den Darmabschnitt ausgebildet ist.

Des weiteren wird vorgeschlagen, daß die Positioniereinrichtung zumindest zwei Führungsarme für den Darmabschnitt aufweist, die mit Abstand voneinander auf gegenüberliegenden Seiten der Schweißzone verlaufen. Bevorzugt ist es, wenn die Positioniereinrichtung die Schweißzone brückenartig überspannt und insbesondere in Form eines auf dem Kopf stehenden U vorgesehen ist. Hierdurch kann das Handgerät praktisch in beliebiger Orientierung an den Darmabschnitt herangeführt werden, wodurch das Einfangen bzw. Einfädeln des Darmabschnitts weiter erleichtert wird. Außerdem ist hierdurch das Handgerät sowohl für Links- als auch für Rechtshänder besonders einfach handhabbar.

Alternativ kann die Positioniereinrichtung lediglich einen Führungsarm für den Darmabschnitt aufweisen, der seitlich versetzt zur Schweißzone verläuft und dabei abgewinkelt sein kann.

Die Schweißzone ist vorzugsweise in einer Vertiefung des Gerätes gelegen. Das Handgerät weist vorzugsweise ein stabförmige Grundform mit einem hinteren Griffbereich und einem vorderen, die Schweißbacken und die Positioniereinrichtung umfassenden Arbeitsbereich auf. Die Positioniereinrichtung ragt vorzugsweise über die Kontur der Grundform des Gerätes hinaus.

Für die Schweißbacken ist vorzugsweise ein pneumatischer oder elektrischer bzw. elektromechanischer Antrieb vorgesehen, wobei ein pneumatischer Antrieb insbesondere dann von Vorteil ist, wenn das Handgerät im Bereich von Füllmaschinen verwendet wird, wo Druckluft zur Verfügung steht.

Die Schweißbacken sind vorzugsweise elektrisch beheizbar.

Des weiteren ist bevorzugt vorgesehen, daß eine Antriebseinrichtung, eine Heizeinrichtung sowie eine Temperaturmesseinrichtung für die Schweißbacken zu einer kompakten, einen Bestandteil des Handgeräts bildenden und insbesondere in einem gemeinsamen Gehäuse untergebrachten Einheit zusammengefaßt sind.

Weitere bevorzugte Ausführungsformen der Erfindung sind auch in den Unteransprüchen, der Beschreibung sowie der Zeichnung angegeben.

Die Erfindung wird im Folgenden beispielhaft unter Bezugnahme auf die Zeichnung beschrieben. Es zeigen:
- Fig. 1: eine perspektivische Ansicht eines mobilen Handschweißgerätes gemäß einer Ausführungsform der Erfindung,
- Fig. 2: einen Teil des Gerätes von Fig. 1 in einer vergrößerten Darstellung, und
- Fig. 3: eine Darstellung entsprechend Fig. 2 mit einer Positioniereinrichtung in einer alternativen Ausgestaltung.

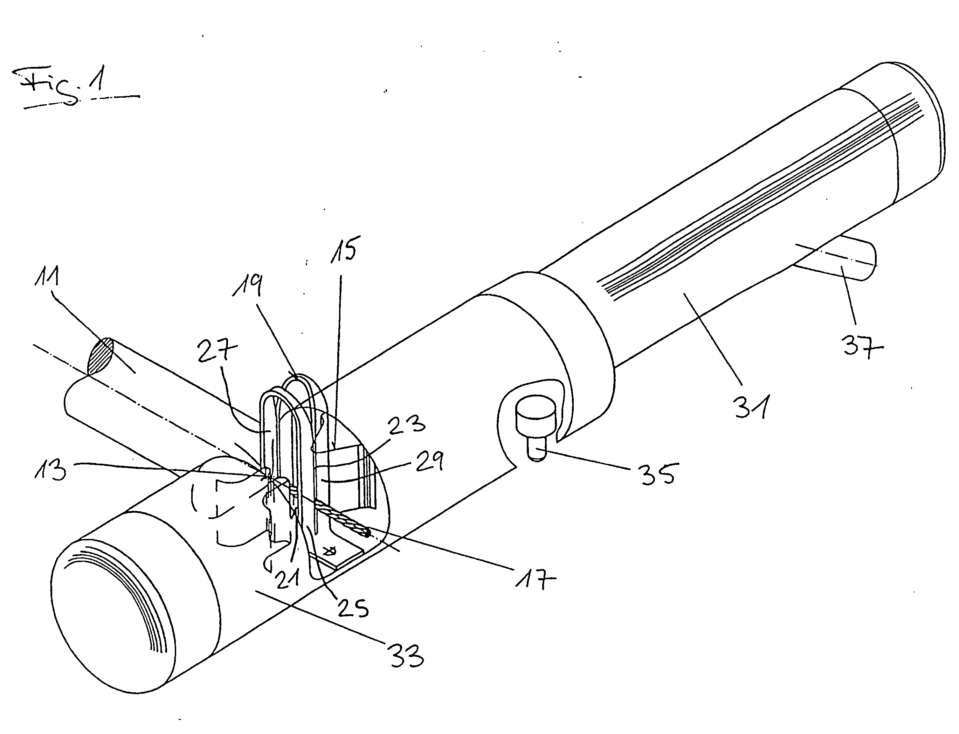

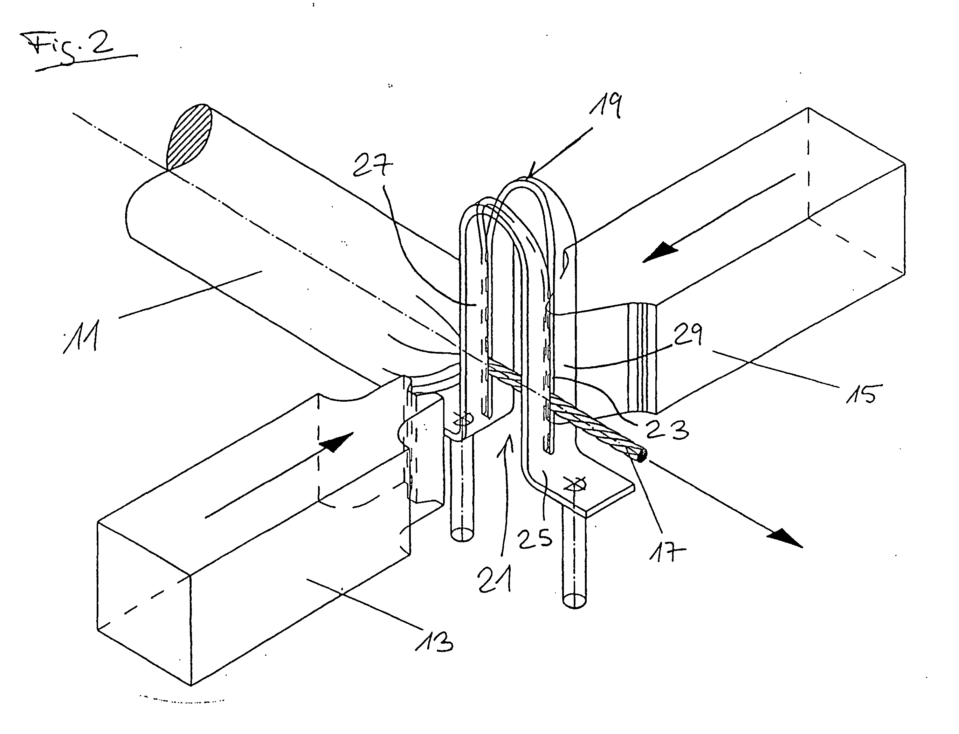

Das in Fig. 1 und 2 dargestellte Handschweißgerät gemäß der Erfindung besitzt eine zylindrische, stabartige Grundform mit einem hinteren Griffbereich 31 und einem vorderen Arbeitsbereich, der ein Gehäuse 33 umfaßt. In dem Gehäuse 33 sind zwei relativ zueinander bewegbare, elektrisch beheizbare Schweißbacken 13, 15 parallel zur Gerätelängsache beweglich angeordnet. Eine der Schweißbacken 13, 15 kann dabei gerätefest angebracht sein.

Zwischen den Schweißbacken 13, 15 ist eine als Einführhilfe für einen verdrillten Darmabschnitt 17 dienende Positioniereinrichtung 19 angeordnet, mit welcher der Darmabschnitt 17 in einer zwischen den Schweißbacken 13, 15 in einer Gerätevertiefung gelegenen Schweißzone 21 fixiert wird.

Der Darmabschnitt 17 ist als Abdrehung im Anschluß an eine Wurst 11 dargestellt, kann aber grundsätzlich auch unverdreht und im ungefüllten oder teilgefüllten Zustand verschweißt werden.

Bei dem Darm handelt es sich um einen Naturdarm, wobei aber grundsätzlich mit dem erfindungsgemäßen Handgerät auch aus einem geeigneten Material bestehende Kunstdärme verschweißt werden können.

In der in Fig. 1 und 2 dargestellten Ausführungsform ist die Positioniereinrichtung 19 aus einem flachen Metallstreifen 25 hergestellt, der in eine U-Form gebogen und mit nach außen abgewinkelten freien Endbereichen der U-Schenkel am Boden der Gerätevertiefung befestigt ist.

Der Flachstreifen 25 ist mit einem Schlitz 23 versehen, der sich im Bereich des freien Endes der aus der Gerätevertiefung herausragenden Einführhilfe 19 V- oder trichterartig erweitert. Ein mittels der Schlitzerweiterung eingefangener Darmabschnitt 17 wird entlang des Schlitzes 23 in die Schweißzone 21 zwangsgeführt.

Der Schlitz 23 ist in der Breite auf die Art des Darmes sowie auf das Darmkaliber derart abgestimmt, daß der Darm einerseits nicht beschädigt wird, und daß andererseits beim Durchziehen des Darmes durch den Schlitz 23 im Darm vorhandenes Produkt möglichst vollständig aus dem Darm herausgedrückt wird.

Bezüglich der Schweißzone 21 ist die erfindungsgemäße Positioniereinrichtung 19 derart angeordnet, daß sie die Schweißzone 21 brückenartig überspannt. Von den U-Schenkeln gebildete, geschlitzte Führungsarme 27, 29 der Einführhilfe 19 verlaufen dabei mit Abstand voneinander auf gegenüberliegenden Seiten der Schweißzone 21. Der Darmabschnitt 17 wird somit von den Führungsarmen 27, 29 an zwei in Darmlängsrichtung beabstandeten Stellen gehalten und dadurch nicht nur in einem definierten Abstand von den Schweißbacken 13, 15 fixiert, sondern außerdem mit einer Orientierung senkrecht zur Bewegungsrichtung der Schweißbacken 13, 15 gehalten. Die Bewegungsrichtung der Schweißbacken 13, 15, die Längsrichtung des Darmabschnitts 17 sowie die von dem Gerät abstehende Einführhilfe 19 stehen somit paarweise senkrecht zueinander.

Die Schweißbacken 13, 15 werden elektrisch beheizt. Hierzu wird das Handgerät über einen Versorgungsanschluß 37 mit Strom versorgt. Über den Anschluß 37 erfolgt außerdem die Zufuhr von Druckluft für den pneumatischen Antrieb der Schweißbacken 13, 15. Ferner umfaßt das Handgerät Einrichtungen zur Messung der Temperatur an den mit dem Darm 17,in.Kontakt gelangenden Schweißflächen der Schweißbacken 13, 15 sowie zur Regelung der Schweißtemperatur, wobei die Schweißbacken 13, 15 unabhängig voneinander temperaturregelbar sind. Die Temperatur der Schweißbacken 13, 15 kann für unterschiedliche Darmarten (z.B. Schweinedarm, Schafdarm etc.) individuell vorgewählt werden. Die Temperaturregelung sorgt dafür, daß die Temperatur der Schweißbacken 13, 15 entsprechend dem jeweils vorgewählten Temperaturwert konstant gehalten wird. Das Handgerät ist hierzu über den Versorgungsanschluß 37 mit einer externen Steuerelektronik verbunden, die bevorzugt in einem Schaltschrank untergebracht ist.

Die Antriebseinrichtung, die Heizeinrichtung sowie die Temperaturmesseinrichtung für die Schweißbacken 13, 15 sind zu einer kompakten Einheit zusammengefaßt und in dem gemeinsamen Gehäuse 33 untergebracht.

Anstelle eines pneumatischen Antriebs für die Schweißbacken 13, 15 kann auch ein elektrischer bzw. elektromechanischer Antrieb vorgesehen sein, um die Schweißbacken 13, 15 zum Öffnen und Schließen aufeinander zu bzw. voneinander weg zu bewegen. Grundsätzlich ist es erfindungsgemäß auch möglich, die Schweißbacken 13, 15 manuell über eine mit der Hand betätigbare mechanische Antriebseinrichtung zu bewegen.

Details der Ausgestaltung und Funktionsweise der Schweißbacken 13, 15 sind nicht Gegenstand der Erfindung, so daß hierauf nicht näher eingegangen wird. Es sei lediglich erwähnt, daß aufgrund ihrer Geometrie die Wirkungsweise der Schweißbacken 13, 15 von der Höhenlage des Darmabschnitts 17 unabhängig ist, da sich die Schweißbacken 13, 15 geradlinig entlang einer gemeinsamen Achse aufeinander zu bewegen.

Erfindungsgemäß kann der Benutzer mit lediglich einer Hand, in welcher er das Handgerät hält, den jeweils zu behandelnden Darmabschnitt 17 über die erfindungsgemäße Einführhilfe 19 einfangen. Die Zwangsführung in Form des Schlitzes 23 sorgt automatisch dafür, daß der Darmabschnitt 17 in die Schweißzone 21 gelangt und dort in einer Sollposition relativ zu den Schweißbacken 13, 15 fixiert wird. Die Einführhilfe 19 sorgt dabei in vorteilhafter Weise dafür, daß der Darmabschnitt 17 beim Einfädeln und vor Beginn des eigentlichen Schweißvorgangs den Schweißbacken 13, 15 nicht zu nahe kommt.

Der Benutzer braucht den Darmabschnitt 17 lediglich mit der Einführhilfe 19 einzufangen, wodurch der Darmabschnitt 17 in die Schweißzone 21 zwischen den Schweißbacken 13, 15 gelangt. Für den korrekten Abstand zu den Schweißbacken 13, 15 wird durch die Schlitzführung 23 automatisch gesorgt.

Wenn die Schweißbacken 13, 15 dann nach Betätigung eines am Handgerät angebrachten Auslöseknopfs 35 und Aktivieren der Antriebseinrichtung aufeinander zu in die geschlossene Stellung bewegt werden, wird der in seiner Sollage in der Schweißzone 21 fixierte Darmabschnitt 17 von den bei geschlossenen Schweißbacken 13, 15 zusammenwirkenden Schweißflächen derart beaufschlagt, daß er an zwei in Darmlängsrichtung, d.h. senkrecht zur Bewegungsrichtung der Schweißbacken 13, 15, beabstandeten Stellen verschweißt wird. Der zwischen den Schweißstellen liegende Darmbereich ist dabei thermischen und mechanischen Belastungen derart ausgesetzt, daß der Darm zwischen den Schweißstellen z.B. durch Auseinanderziehen leicht durchtrennt werden kann. Das Handgerät braucht hierzu lediglich relativ zu den nunmehr verschlossenen Würsten 11 bewegt zu werden.

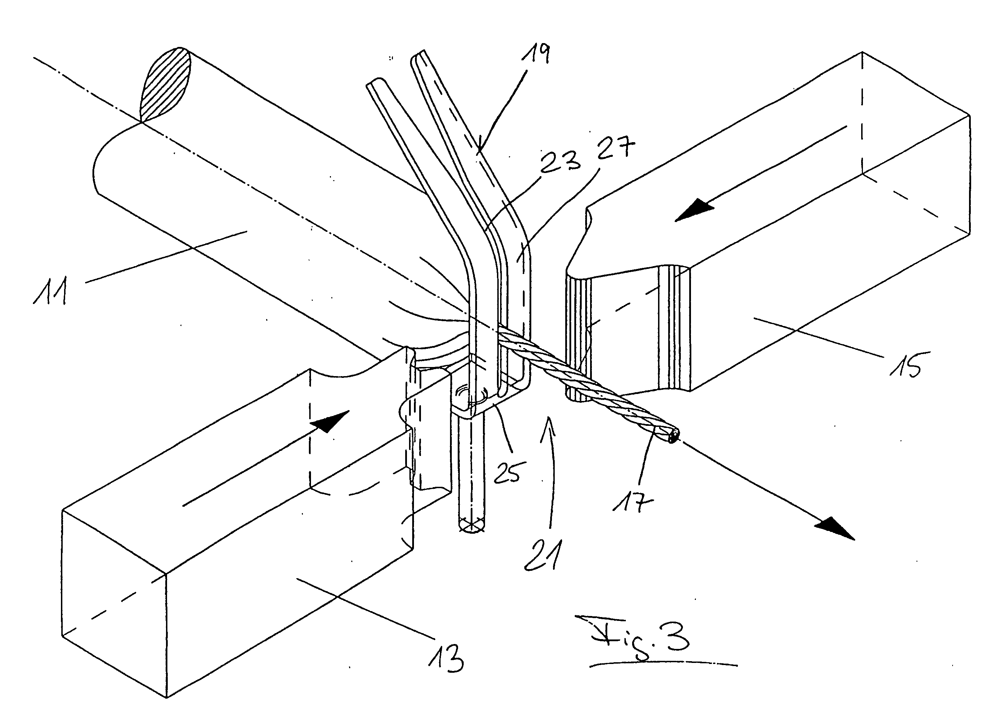

Fig. 3 zeigt eine weitere mögliche Ausgestaltung der erfindungsgemäßen Positioniereinrichtung 19. Die aus einem flachen Materialstreifen 25 hergestellt Positioniereinrichtung 19 umfaßt einen einzigen Führungsarm 27, der mit einem Führungsschlitz 23 versehen ist und seitlich versetzt zur Schweißzone 21 verläuft.

Der Führungsarm 27 erstreckt sich ausgehend von der Schweißzone 21 zunächst senkrecht zur Bewegungsrichtung der Schweißbacken 13, 15 und senkrecht zur Darmlängsrichtung. Außerhalb der Schweißbacken 13, 15 ist der Führungsarm 27 derart von der Schweißzone 21 weg abgewinkelt, daß er sich nicht über die Schweißzone 21 hinweg erstreckt. In diesem schräg verlaufenden Armabschnitt erweitert sich der Führungsschlitz 23 V-artig in Richtung des freien Endes der Einführhilfe 19.

Die erfindungsgemäßen Einführhilfen 19 können aus Metall oder Kunststoff hergestellt sein.

Prinzipiell ist es bei entsprechender Geometrie der Schweißbacken 13, 15 mit dem erfindungsgemäßen Handschweißgerät auch möglich, zwei Würste bzw. Wurststränge miteinander zu verbinden, indem die betreffenden Darmenden miteinander verschweißt werden.

### Bezugszeichenliste

- 11: Wurst
- 13: Schweißbacke
- 15: Schweißbacke
- 17: Darmabschnitt
- 19: Positioniereinrichtung
- 21: Schweißzone
- 23: Zwangsführung, Schlitz
- 25: Flachstreifen
- 27: Führungsarm
- 29: Führungsarm
- 31: Griffbereich
- 33: Gehäuse
- 35: Auslöser
- 37: Versorgungsanschluß

## Patentansprüche

1. Mobiles Handgerät zum Verschweißen des Darmes von insbesondere einen Wurststrang bildenden Würsten (11) mit zumindest zwei beheizbaren und relativ zueinander bewegbaren Schweißbacken (13, 15), zwischen die in einer offenen Stellung ein zu verschweißender Darmabschnitt (17) einbringbar ist, der durch Schließen der Schweißbacken (13, 15) verschweißbar ist, und mit einer zwischen den Schweißbacken (13, 15) angeordneten Positioniereinrichtung (19), mit welcher der Darmabschnitt (17) bei geöffneten Schweißbacken (13, 15) und beim Schließen der Schweißbacken (13, 15) am Gerät in einer zwischen den Schweißbacken (13, 15) gelegenen Schweißzone (21) fixierbar ist.

2. Mobiles Handgerät nach Anspruch 1,
**dadurch gekennzeichnet, ,**
**daß** der mittels der Positioniereinrichtung (19) fixierte Darmabschnitt (17) in der Schweißzone (21) von den geöffneten Schweißbacken (13, 15) beabstandet ist.

3. Mobiles Handgerät nach Anspruch 1 oder 2,
**dadurch gekennzeichnet,**
**daß** die Positioniereinrichtung (19) eine in die Schweißzone (21) führende Zwangsführung (23) für den Darmabschnitt (17) aufweist.

4. Mobiles Handgerät nach Anspruch 3,
**dadurch gekennzeichnet,**
**daß** die Zwangsführung wenigstens einen zur Schweißzone (21) führenden Schlitz (23) für den Darmabschnitt (17) umfaßt.

5. Mobiles Handgerät nach Anspruch 3 oder 4,
**dadurch gekennzeichnet,**
**daß** der Schlitz (23) in einem freien, von der Schweißzone (21) entfernten Endbereich der Positioniereinrichtung (19) insbesondere V-förmig erweitert ist.

6. Mobiles Handgerät nach Anspruch 4 oder 5,
**dadurch gekennzeichnet,**
**daß** die Breite des Schlitzes (23) zumindest im Bereich der Schweißzone (21) etwa dem Durchmesser des insbesondere die Form einer Abdrehung aufweisenden Darmabschnitts (17) entspricht.

7. Mobiles Handgerät nach einem der vorhergehenden Ansprüche,
**dadurch gekennzeichnet,**
**daß** die Positioniereinrichtung (19) zumindest einen vorzugsweise gebogenen Flachstreifen (25) umfaßt, in dem bevorzugt wenigstens ein in die Schweißzone (21) führender Schlitz (23) für den Darmabschnitt (17) ausgebildet ist.

8. Mobiles Handgerät nach einem der vorhergehenden Ansprüche,
**dadurch gekennzeichnet,**
**daß** die Positioniereinrichtung (19) zumindest zwei Führungsarme (27, 29) für den Darmabschnitt (17) aufweist, die mit Abstand voneinander auf gegenüberliegenden Seiten der Schweißzone (21) verlaufen.

9. Mobiles Handgerät nach einem der vorhergehenden Ansprüche,
**dadurch gekennzeichnet,**
**daß** die Positioniereinrichtung (19) die Schweißzone (21) brückenartig überspannt und insbesondere in Form eines auf dem Kopf stehenden U vorgesehen ist.

10. Mobiles Handgerät nach einem der vorhergehenden Ansprüche,
**dadurch gekennzeichnet,**
**daß** die Positioniereinrichtung (19) genau einen Führungsarm (27) für den Darmabschnitt (17) aufweist, der seitlich versetzt zur Schweißzone (21) verläuft und insbesondere abgewinkelt ist.

11. Mobiles Handgerät nach einem der vorhergehenden Ansprüche,
**dadurch gekennzeichnet,**
**daß** die Schweißzone (21) in einer Vertiefung des Gerätes gelegen ist.

12. Mobiles Handgerät nach einem der vorhergehenden Ansprüche,
**dadurch gekennzeichnet,**
**daß** die Positioniereinrichtung (19) über die Kontur einer insbesondere langgestreckten und bevorzugt zylinderförmigen Grundform des Gerätes hinausragt.

13. Mobiles Handgerät nach einem der vorhergehenden Ansprüche,
**dadurch gekennzeichnet,**
**daß** es eine stabförmige Grundform mit einem hinteren Griffbereich (31) und einem vorderen, die Schweißbacken (13, 15) und die Positioniereinrichtung (19) umfassenden Arbeitsbereich aufweist.

14. Mobiles Handgerät nach einem der vorhergehenden Ansprüche,
**dadurch gekennzeichnet,**
**daß** ein pneumatischer oder elektrischer Antrieb für die Schweißbacken (13, 15) vorgesehen ist.

15. Mobiles Handgerät nach einem der vorhergehenden Ansprüche,
**dadurch gekennzeichnet,**
**daß** die Schweißbacken (13, 15) elektrisch beheizbar sind.

16. Mobiles Handgerät nach einem der vorhergehenden Ansprüche,
**dadurch gekennzeichnet,**
**daß** eine Antriebseinrichtung, eine Heizeinrichtung sowie eine Temperaturmesseinrichtung für die Schweißbacken (13, 15) zu einer kompakten, einen Bestandteil des Handgeräts bildenden und insbesondere in einem gemeinsamen Gehäuse (33) untergebrachten Einheit zusammengefaßt sind.

## Claims

1. A mobile hand unit for the welding of the casing of sausages (11), in particular of sausages forming a sausage string, having at least two heatable welding jaws (13, 15), which can be moved relative to one another and between which a casing section (17) to be welded can be introduced in an open position and can be welded by closing the welding jaws (13, 15), and having a positioning device (19) which is arranged between the welding jaws (13, 15) and with which the casing section (17) can be fixed to the unit in a welding zone (21) disposed between the welding jaws (13, 15) with open welding jaws (13, 15) and on the closing of the welding jaws (13, 15).

2. A mobile hand unit in accordance with claim 1, **characterised in that** the casing section (17) fixed by means of the positioning device (19) is spaced part from the open welding jaws (13, 15) in the welding zone (21).

3. A mobile hand unit in accordance with claim 1 or claim 2, **characterised in that** the positioning device (19) has a compulsory guide (23) for the casing section (17) leading into the welding zone (21).

4. A mobile hand unit in accordance with claim 3, **characterised in that** the compulsory guide includes at least one slot (23) for the casing section (17) leading to the welding zone (21).

5. A mobile hand unit in accordance with claim 3 or claim 4, **characterised in that** the slot (23) is expanded, in particular in a V shape, in a free end region of the positioning device (19) remote from the welding zone (2).

6. A mobile hand unit in accordance with claim 4 or claim 5, **characterised in that** the width of the slot (23) corresponds approximately to the diameter of the casing section (17), in particular having the shape of a twisted part, at least in the region of the welding zone (21).

7. A mobile hand unit in accordance with any one of the preceding claims, **characterised in that** the positioning device (19) includes at least one flat strip (25), preferably a bent flat strip, in which preferably at least one slot (23) leading into the welding zone (21) is formed for the casing section (17).

8. A mobile hand unit in accordance with any one of the preceding claims, **characterised in that** the positioning device (19) has at least two guide arms (27, 29) for the casing section (17) which extend spaced apart from one another on opposite sides of the welding zone (21).

9. A mobile hand unit in accordance with any one of the preceding claims, **characterised in that** the positioning device (19) spans the welding zone (21) like a bridge and is in particular provided in the form of an inverted U.

10. A mobile hand unit in accordance with any one of the preceding claims, **characterised in that** the positioning unit (19) has precisely one guide arm (27) for the casing section (17) which extends slightly offset to the welding zone (21) and is in particular angled.

11. A mobile hand unit in accordance with any one of the preceding claims, **characterised in that** the welding zone (21) is disposed in a recess of the unit.

12. A mobile hand unit in accordance with any one of the preceding claims, **characterised in that** the positioning device (19) projects beyond the outline of a basic shape of the unit which is in particular elongate and preferably cylindrical.

13. A mobile hand unit in accordance with any one of the preceding claims, **characterised in that** it has a bar-shaped basic shape with a rear handle region (31) and a front working region including the welding jaws (13, 15) and the positioning device (19).

14. A mobile hand unit in accordance with any one of the preceding claims, **characterised in that** a pneumatic or electrical drive is provided for the welding jaws (13, 15).

15. A mobile hand unit in accordance with any one of the preceding claims, **characterised in that** the welding jaws (13, 15) can be heated electrically.

16. A mobile hand unit in accordance with any one of the preceding claims, **characterised in that** a working device, a heating device and a temperature measuring device for the welding jaws (13, 15) are assembled to one compact unit forming a component of the hand unit and in particular accommodated in a common housing (33).

## Revendications

1. Appareil manuel mobile pour le soudage du boyau d'une saucisse (11) formant en particulier une ligne de saucisses comprenant au moins deux mâchoires de soudage (13, 15) pouvant être chauffées et déplacées l'une par rapport à l'autre, entre lesquelles une partie de boyau (17) à souder peut être amenée dans une position ouverte, laquelle partie peut être soudée par la fermeture des mâchoires de soudage (13, 15), et avec un système de positionnement (19) disposé entre les mâchoires de soudage (13, 15), avec lequel la partie de boyau (17) peut être fixée avec des mâchoires de soudage (13, 15) ouvertes et lors de la fermeture des mâchoires de soudage (13, 15) sur l'appareil dans une zone de soudage (21) située entre les mâchoires de soudage (13, 15).

2. Appareil manuel mobile selon la revendication 1, **caractérisé en ce que** la partie de boyau (17) fixée au moyen du système de positionnement (19) est espacée dans la zone de soudage (21) des mâchoires de soudage (13, 15) ouvertes.

3. Appareil manuel mobile selon la revendication 1 ou 2, **caractérisé en ce que** le système de positionnement (19) présente un guidage forcé (23) aboutissant dans la zone de soudage (21) pour la partie de boyau (17).

4. Appareil manuel mobile selon la revendication 3, **caractérisé en ce que** le guidage forcé comprend au moins une fente (23) aboutissant à la zone de soudage (21) pour la partie de boyau (17).

5. Appareil manuel mobile selon la revendication 3 ou 4, **caractérisé en ce que** la fente (23) est élargie en particulier en forme de V dans une zone d'extrémité libre, éloignée de la zone de soudage (21), du système de positionnement (19).

6. Appareil manuel mobile selon la revendication 4 ou 5, **caractérisé en ce que** la largeur de la fente (23) correspond au moins dans la plage de la zone de soudage (21) à peu près au diamètre de la partie de boyau (17) présentant en particulier la forme d'une partie tournée.

7. Appareil manuel mobile selon l'une des revendications précédentes, **caractérisé en ce que** le système de positionnement (19) comprend au moins une bande plate (25) de préférence pliée, dans laquelle de préférence au moins une fente (23) aboutissant dans la zone de soudage (21) est conçue pour la partie de boyau (17).

8. Appareil manuel mobile selon l'une des revendications précédentes, **caractérisé en ce que** le système de positionnement (19) présente au moins deux bras de guidage (27, 29) pour la partie de boyau (17) qui sont agencés à distance l'un de l'autre sur des côtés opposés de la zone de soudage (21).

9. Appareil manuel mobile selon l'une des revendications précédentes, **caractérisé en ce que** le système de positionnement (19) enjambe la zone de soudage (21) à la façon d'un pont et est prévu en particulier sous la forme d'un U retourné.

10. Appareil manuel mobile selon l'une des revendications précédentes, **caractérisé en ce que** le système de positionnement (19) présente exactement un bras de guidage (27) pour la partie de boyau (17) qui est agencée avec un décalage latéral par rapport à la zone de soudage (21) et est en particulier coudée.

11. Appareil manuel mobile selon l'une des revendications précédentes, **caractérisé en ce que** la zone de soudage (21) est située dans une cavité de l'appareil.

12. Appareil manuel mobile selon l'une des revendications précédentes, **caractérisé en ce que** le système de positionnement (19) dépasse du contour d'une forme de base de l'appareil, en particulier étirée en longueur et de préférence cylindrique.

13. Appareil manuel mobile selon l'une des revendications précédentes, **caractérisé en ce qu'**il présente une forme de base en forme de barre avec une zone de préhension (31) arrière et une zone de travail avant, comprenant les mâchoires de soudage (13, 15) et le système de positionnement (19).

14. Appareil manuel mobile selon l'une des revendications précédentes, **caractérisé en ce qu'**il est prévu un entraînement pneumatique ou électrique pour les mâchoires de soudage (13, 15).

15. Appareil manuel mobile selon l'une des revendications précédentes, **caractérisé en ce que** les mâchoires de soudage (13, 15) peuvent être chauffées électriquement.

16. Appareil manuel mobile selon l'une des revendications précédentes, **caractérisé en ce qu'**un dispositif d'entraînement, un appareil de chauffage et un appareil de mesure de température pour les mâchoires de soudage (13, 15) sont regroupés en une unité compacte, formant un composant de l'appareil manuel et logée en particulier dans un boîtier (33) commun.
